# FASCICULE DE BREVET EUROPEEN

(11) **EP 0 786 121 B1**
(45) Date de publication et mention de la délivrance du brevet: **12.01.2000**
(21) Numéro de dépôt: 94930247.5
(22) Date de dépôt: 12.10.1994
(51) Int. Cl.: G07F 17/30

(54) **SYSTEME DE REPRODUCTION AUDIO-VISUELLE NUMERIQUE INTELLIGENT**
INTELLIGENTES SYSTEM ZUR NUMERISCHEN AUDIO-VISUELLEN REPRODUKTION
INTELLIGENT DIGITAL AUDIOVISUAL PLAYBACK SYSTEM

(43) Date de publication de la demande: 30.07.1997
(60) Demande divisionnaire: 99104129.4
(73) Titulaire: TOUCHTUNES MUSIC CORPORATION, Las Vegas, NV 89104 (US)
(72) Inventeur: NATHAN, Guy, F-91330 Yerres (FR); MASTRONARDI, Tony, Pierrefonds, Quebec H8Y 3L2 (CA)
(74) Mandataire: Debay, Yves
(86) Numéro de dépôt international: FR9401185
(87) Numéro de publication internationale: WO9612255

(56) Documents cités:
- WO-A-91/20082
- WO-A-93/18465
- GB-A- 2 122 799
- GB-A- 2 193 420

## Description

La présente invention concerne un système de reproduction audio-visuelle déclenché par paiement de redevances.

De tels systèmes de reproduction audio-visuelle sont généralement rencontrés dans des cafés ou dans des pubs. Ce type de système est en fait constitué d'une machine de reproduction sonore appelée ordinairement juke-box associée à un moniteur assurant la visualisation d'images vidéo ou de clips vidéo. Pour cela, le juke-box est équipé d'un lecteur de disques compacts vidéo et d'une discothèque de disques compacts vidéo.et comporte des boutons de présélection repérant les titres des morceaux de musique qu'il est proposé de choisir. Le paiement d'une redevance adéquate suivi d'une ou plusieurs présélections autorise le déclenchement du système avec le chargement automatique, dans le lecteur, du disque sur lequel figure le morceau choisi, la reproduction audio-visuelle désirée pouvant alors commencer.

Ces systèmes, bien que permettant une reproduction fidèle et de bonne qualité, présentent néanmoins de sérieux inconvénients. Ainsi, un premier inconvénient est relatif au volume nécessaire pour le stockage de la discothèque, ce qui implique, en conséquence, que le système soit de dimensions importantes et donc encombrant. Egalement, ces systèmes qui font appel à un matériel surtout mécanique utilisant des techniques sophistiquées présentent des taux de pannes significatifs, ce qui est un autre inconvénient. Enfin, il est très rare que tous les morceaux d'un disque soient régulièrement écoutés, certains même ne le sont quasiment jamais mais ne peuvent cependant pas pour autant être éliminés. Outre cet inconvénient, l'inconvénient suivant est présenté du fait que les sociétés gérant et distribuant ces systèmes mettent dans le circuit un nombre limité de disques identiques et imposent une certaine rotation chez leurs clients, ce qui implique parfois pour ces derniers une attente désagréable lorsqu'un disque n'est pas disponible.

Par ailleurs, il est connu par la demande de brevet PCT/WO/ 93 18465 des juke-boxes informatisés permettant de recevoir à travers un réseau de télécommunication et un modem connectant le juke-box au réseau, des informations numérisées constituant des chansons ou morceaux musicaux téléchargés dans une mémoire de masse du juke-box. Le système de communication sert également au téléchargement de fichiers représentatifs d'informations graphiques numérisées, les chansons et les fichiers graphiques étant compressés avant leur envoi sur le réseau. Le processeur du juke-box exploite ensuite ces fichiers en les décompressant et en envoyant les données graphiques au circuit vidéo et les données de la chanson au circuit audio.

La présente invention a pour but de remédier aux divers inconvénients présentés par les systèmes de l'art antérieur et propose un système de reproduction audio-visuelle numérique intelligent, pratique à mettre en oeuvre, peu encombrant, fiable, autorisant le stockage au niveau du titre ainsi que la suppression ou l'insertion aisée de titres respectivement non écoutés ou désirés et ceci tout en conservant des performances et une qualité de reproduction de haut niveau.

Pour cela, le système de reproduction audio-visuelle mentionné dans le préambule est remarquable en ce qu'il est élaboré autour d'un dispositif à microprocesseur, associé à un dispositif de paiement, d'une part comportant principalement des moyens de mémorisation, pour entre autres stocker, sous forme numérique, les informations visuelles et sonores à exploiter, et d'autre part associé, par l'intermédiaire d'interfaces, à des moyens de visualisation et des moyens de reproduction sonores permettant de créer un univers multimédia, l'ensemble étant géré au moyen d'un système d'exploitation multitâche incluant une librairie d'outils et de services constituée d'une pluralité de modules intégrés dans les moyens de mémorisation pour permettre l'exécution d'opérations simultanées et ordonnées sur les moyens de visulalisation et les moyens de reproduction sonore en évitant tout conflit, les tâches spécifiques des modules étant exécutées simultanément, et la librairie d'outils et de services comprenant au moins un module RMM correspondant au mode de fonctionnement du système dans lequel le système est prêt à manipuler toute requête déclenchée par des événements prédéfinis tels que :
- le toucher de l'écran par un client,
- l'apparition d'une fin de temporisation montrant l'inactivité du système.

Ainsi, toutes les informations audio-visuelles à exploiter sont numérisées et stockées en mémoire et peuvent être alors relues avec une principalement un moniteur vidéo pour la reproduction des images des informations audio-visuelles et un écran tactile de contrôle et d'assistance sur lequel peuvent être sélectionnés au moins quatre tableaux de contrôle, un premier tableau de sélection de titres se déroulant pour aider à la recherche et à la sélection d'un titre désiré, un second tableau de contrôle de gestion pour le réglage du volume, des basses, des aiguës ou la commande de panoramiques sur le moniteur vidéo, un troisième tableau de balayage de la base de données de titres, d'utilisation privée, pour permettre l'exploration de la base de données contenant les titres disponibles au travers du réseau de distribution d'informations audio-visuelles, un quatrième tableau de statistiques, d'utilisation privée, pour les estimations et les calculs statistiques relatifs aux titres.

Un titre nouveau peut être aisément introduit en mémoire de même qu'un titre peu écouté peut être tout aussi facilement supprimé de la mémoire. Avec les sélections musicales, les couvertures d'albums correspondantes peuvent être également stockées sous forme numérisée, pour être ensuite affichées, Les moyens de mémorisation sont prévus pour le stockage d'un minimum de 350 à 400 titres et peuvent être étendus sans aucune difficulté. La simplicité et l'absence d'éléments mécaniques dans le système pour la reproduction des informations audio-visuelles font que le taux de pannes est considérablement réduit ce qui entraîne une maintenance à faible coût avec l'assurance d'un minimum d'interventions. De plus le système d'exploitation multitâche incluant une librairie contenant un ensemble d'outils et de services, permet de faciliter très significativement l'exploitation du fait de son intégration dans les moyens de mémorisation et de la grande flexibilité ainsi apportée. En particulier, il est, grâce à cela, possible de créer un univers multimédia en gérant de manière simple et efficace simultanément la reproduction de sons, l'affichage d'images ou de graphiques et l'animation vidéo. En outre, puisque les informations audio-visuelles sont numériseés et stockées dans les moyens de mémorisation, il est utilisé considérablement moins de place que pour un système de reproduction audio-visuelle traditionnel et par conséquent l'encombrement du système selon l'invention est nettement moindre. Dans ces conditions, les dimensions du bâti dans lequel est plaçé le système sont très réduites et le coût de l'ensemble se trouve également significativement abaissé. L'aspect extérieur du bâti peut, bien entendu, être aisément adapté au caractère de l'établissement.

De manière avantageuse, le système de reproduction audio-visuelle est de plus, associé, par l'intermédiaire d'une interface, à un modem de télécommunications, ledit système étant alors connecté à un réseau de distribution d'informations audio-visuelles au moyen du modem de télécommunications et de liaisons de télécommunications, cette fonction de télécommunications étant également gérée par le système d'exploitation multitâche inclus dans la librairie d'outils et de services intégrée dans les moyens de mémorisation.

La connexion au réseau de distribution d'informations audio-visuelles, de type propriétaire, autorise alors le rapatriement et l'insertion quasi-immédiate de titres désirés dans les moyens de mémorisation du présent système, les liaisons de télécommunications étant, de préférence, de type haute vitesse. Bien entendu, le système d'exploitation multitâche, tout en autorisant la création d'un univers multimédia, permet d'utiliser simultanément et sans conflit les services de télécommunications inclus dans la librairie d'outils et de services.

De manière remarquable, le système peut être, sans aucune difficulté, prévu avec une temporisation pour un déclenchement automatique et périodique après une durée prédéterminée d'inutilisation, cette fonction de temporisation étant inscrite dans les moyens de mémorisation et gérée par le système d'exploitation multitâche. De tels déclenchements automatiques et périodiques pour des reproductions audio-visuelles partielles ou complètes permettent d'attirer l'attention des clients et de les stimuler et entraînent par conséquent une augmentation des revenus.

De manière caractéristique, il est stocké dans les moyens de mémorisation un catalogue des titres, relatifs aux informations audio-visuelles disponibles, avec les redevances correspondantes, la sélection d'un titre entraînant automatiquement un traitement interne réalisant le cumul des redevances relatives au titre sélectionné. Il est ainsi fourni un système de calcul et de vérification des redevances rigoureusement exact.

De même, chaque sélection d'un titre est comptabilisée pour réaliser une statistique d'utilisation affichable, l'affichage étant déclenché par l'appel d'une fonction prédéterminée. Selon cette caractéristique, il est permis au gérant ou au propriétaire du système d'afficher, après appel de la fonction prédéterminée, le compte-rendu statistique des diverses utilisations, ce qui permet de le guider dans le choix des titres à conserver ou à supprimer. Les recettes relatives aux redevances payées et qui sont ainsi comptabilisées de manière exacte sont récupérées par le gérant ou le propriétaire du système au moyen d'une clé.

De préférence, mais cependant de manière non limitative, le système de reproduction audio-visuelle utilise les éléments matériels énumérés et référencés ci-après.

Le dispositif à microprocesseur à utiliser est un système compatible PC de haute performance, le choix lors de la mise en oeuvre s'est porté sur un système du type Intel 80486 DX/2 qui posséde des moyens de mémorisation et les caractéristiques suivantes:
- compatibilité avec le bus local Vesa,
- antémémoire du processeur: 256 kO,
- mémoire vive: RAM de 32 MO
- ports série et parallèle de haute performance,
- adaptateur graphique type SVGA à microprocesseur
- contrôleur de bus type SCSI/2,
- mémoire vive RAM statique auto-alimentée.

Les moyens de visualisation se composent principalement:
- d'un moniteur vidéo à écran plat de 14 pouces (35,56 cm) sans entrelacement de type SVGA à haute résolution et faible rayonnement, c'est ce moniteur qui est utilisé pour la reproduction d'images (par exemple les couvertures d'albums des sélections musicales), de graphiques ou de clips vidéo,
- d'un écran tactile "Intelli Touch" de 14 pouces (35,56 cm) de chez Elo Touch Systems Inc,.qui inclut un panneau de revêtement de la vitre utilisant la "technologie avancée d'onde de surface" ainsi qu'un contrôleur de bus de type AT. Cet écran tactile permet d'afficher diverses informations de sélection utilisées par les clients, ainsi que des informations de commandes et de contrôle de gestion utilisées par le gérant ou le propriétaire du système. Il est également utilisé à des fins de maintenance en combinaison avec un clavier externe qui peut être relié au système qui posséde pour cela un connecteur de clavier, contrôlé par un verrou à clé.

Faisant partie également des moyens de mémorisation, des modules de stockage utilisant des disques durs de type SCSI haute vitesse et haute capacité, sont associés aux moyens de mémorisation déjà présents dans le dispositif à microprocesseur. Ces modules servent au stockage d'informations audio-visuelles.

Un adaptateur de modem de télécommunications haute vitesse 28,8 k/bps est intégré pour autoriser la liaison avec le réseau de distribution d'informations audio-visuelles.

Pour la reproduction des informations sonores des sélections musicales, le système comporte des haut-parleurs amplifiés intégrés et est équipé de cartes électroniques du commerce de type synthétiseur de musique prévues pour supporter un grand nombre de sources d'entrée tout en fournissant une sortie présentant une qualité de type CD (disque compact), en particulier:
- adaptateur audio multimédia à microprocesseur, du type carte "Sound Blaster" SBP32AWE de chez Creative Labs Inc.

Une alimentation thermiquement régulée de 240 watts ventilée fournit l'énergie au système. Cette alimentation est protégée contre les surintensités et les suroscillations.

Le système de reproduction audio-visuelle et notamment le dispositif à microprocesseur sont configurables également par télécommande, pour cela sont utilisés:
- une télécommande infrarouge de chez Mind Path Technologies Inc., émetteur qui possède 15 touches de commande pour le système à microprocesseur et 8 touches de commande pour dispositif de projection.
- un récepteur infrarouge avec adaptateur série de chez Mind Path Technologies Inc.

Un dispositif de paiement de redevances de chez National Rejectors Inc., est également intégré au système. Il est également possible d'utiliser tout autre dispositif qui permette la réception de tout mode de paiement par pièces, billets, jetons, cartes magnétiques à puces ou combinaison des moyens de paiement

Pour loger le système, il est de plus prévu un châssis ou bâti en acier avec garnitures extérieures personnalisables.

Outre ces éléments, un microphone sans fil est incorporé au système, ce qui permet de transformer ce dernier en un puissant système d'annonces et d'informations destinées au public ou éventuellement en machine de karaoké. De même un système de haut-parleurs sans fil peut être utilisé par le système. Enfin, une commande à distance permet, par exemple de derrière le bar, d'accéder et de contôler différentes commandes telles que:
- la commande marche/arrêt du microphone,
- la commande de mise en sourdine des haut-parleurs,
- la commande de contrôle de volume sonore,
- la commande d'annulation de la sélection musicale en train d'être écoutée.

Le choix du logiciel développé ou utilisé pour l'exploitation du système de reproduction audio-visuelle a été volontairement orienté vers une importante convivialité pour l'utilisateur. Dans cette optique, toutes les caractéristiques dudit système peuvent être contrôlées par l'intermédiaire de l'écran tactile graphique d'utilisation simple et immédiate en coopération avec un système d'aide à synthèse de parole.

Pour cela, de manière remarquable, sur l'écran tactile utilisé pour le contrôle et l'assistance peuvent être sélectionnés au moins quatre tableaux de contrôle, un premier tableau de sélection de titres se déroulant pour aider les clients à la recherche et à la sélection d'un titre désiré, un second tableau de contrôle de gestion pour le réglage du volume, des basses, des aiguës ou la commande de panoramiques sur le moniteur vidéo, un troisième tableau de balayage de la base de données de titres, d'utilisation privée, pour permettre au gérant ou au propriétaire du système d'explorer la base de données contenant les titres disponibles au travers du réseau de distribution d'informations audio-visuelles pour commander et rapatrier lesdits titres, un quatrième tableau de statistiques, d'utilisation privée, pour les estimations et les calculs statistiques relatifs aux titres.

Les sélections par les clients de morceaux musicaux sont grandement simplifiées du fait de la présence de cette interface graphique présentant des facilités telles que le balayage au travers des titres disponibles selon différents critéres de sélection, par exemple le titre, l'auteur, la catégorie, etc. De plus, lorsqu'un morceau musical est sélectionné, la couverture de l'album auquel il appartient peut être affichée en même temps que certaines données statistiques telles que l'auteur du morceau, la longueur du morceau, la marque de l'album, etc.

Dans ce but, le logiciel d'exploitation du système a été élaboré autour d'une librairie d'outils et de services très largement orientée vers le domaine audio-visuel dans un univers multimédia. Cette librairie inclut de manière avantageuse un système d'exploitation multitâche performant qui autorise efficacement l'exécution simultanée de multiples fragments de code. Ce logiciel d'exploitation permet ainsi les exécutions concurrentes, de manière ordonnée et en évitant tout conflit, d'opérations réalisées sur les moyens de visualisation, les moyens de reproduction sonores de même que la gestion des liaisons de télécommunications au travers du réseau de distribution. De plus, ce logiciel présente une grande flexibilité car il permet au propriétaire de l'établissement d'exploiter des options non disponibles auparavant, options telles que:
- le repli automatique vers une source auxiliaire, comme par exemple un tuner FM, lors d'une inactivité de la fonction principale,
- la télécommande du contrôle de volume sonore,
- l'annulation ou le saut d'un morceau musical,
- la superposition d'un microphone sur le son existant pour effectuer des annonces ou transformer le système en machine karaoké,
- le contrôle de l'amplificateur quant à la puissance de sortie, la balance des voies de droite ou de gauche, le réglage des fréquences basses ou aiguës,
- le démarrage automatique d'une reproduction audio-visuelle à intervalles réglables lorsque le système est inactif.

De manière avantageuse, le réseau de distribution d'informations audio-visuelles fait partie intégrante de l'univers du système selon l'invention et il permet au gérant ou au propriétaire du système de bénéficier de possibilités et de commodités nouvelles et puissantes, comme par exemple:
- l'assisttance technique distante: soit pour des problèmes de dysfonctionnements mineurs en assistant le gérant ou le propriétaire du système, soit pour des problèmes plus importants en aidant les techniciens à localiser la panne et les composants défectueux,
- la gestion de la sécurité: chaque système se met en rapport avec un système contrôleur local selon un schéma temporel préétabli pour l'acquisition d'un signal d'approbation, sous la forme d'un numéro d'enregistrement, l'autorisant à fonctionner. En outre, s'il est constaté une fraude ou si le système ne peut plus communiquer au travers du réseau, ledit système s'arrête automatiquement de fonctionner,
- l'acquisition de morceaux musicaux avec les couvertures d'albums: le gérant ou le propriétaire du système peut sélectionner et acquérir des morceaux musicaux en explorant la base de données de sélection. Le transfert d'un morceau musical avec sa couverture d'album ainsi que l'intégration dans la liste des titres disponibles sont effectués dans une période de temps très réduite,
- le perfectionnement du système: la maintenance corrective de problèmes importants ou mineurs relatifs au logiciel d'exploitation du système, les améliorations ou les perfectionnements sont rendus possibles par l'intermédiaire des liaisons de télécommunications au travers du réseau de distribution. Seules quelques minutes sont nécessaires pour transférer ces modifications à un quelconque système du réseau,
- la collecte de statistiques: toutes les statistiques et les données internes à un système sont rapidement disponibles pour être compilées au travers du réseau de distribution, ces statistiques permettent d'analyser concrètement et efficacement toute situation du marché,
- la facturation: le réseau de distribution appelle automatiquement le système qui a enregistré les sommes encaissées par le système à la suite du paiement effectué par l'utilisateur, calcule les redevances de droit d'auteur que le gérant ou le propriétaire du système doit payer à la société du réseau de distribution et produit les états comptables appropriés,
- la commercialisation et les promotions: sur requête d'un fournisseur de titres, dans un but promotionnel, la reproduction numérique haute fidélité d'un titre est disponible pour le gérant ou le propriétaire du système dans les heures qui suivent, par l'intermédiaire du réseau de distribution.

La numérisation des sélections musicales qui sont rendues disponibles au travers du réseau de distribution est réalisée à l'aide de divers outils logiciels commercialement disponibles en fournissant des fichiers formatés de données standard.

Les données audio-visuelles numérisées sont stockées dans un format utilisant une compression standard. Le système décompresse les sélections musicales stockées dans les moyens de mémorisation au moment où ces dernières sont reproduites, ce qui permet ainsi de réduire considérablement l'espace mémoire nécessaire pour les stocker tout en optimisant les délais lors des transferts par l'intermédiaire des liaisons de télécommunications.

Chaque sélection est disponible selon deux formats numérisés: avec une qualité hi-fi ou une qualité CD. Ceci autorise un équilibre avantageux entre l'espace mémoire nécessaire et la qualité de reproduction requise qui dépend du niveau de bruit effectif dans l'établissement et de l'exigence de qualité.

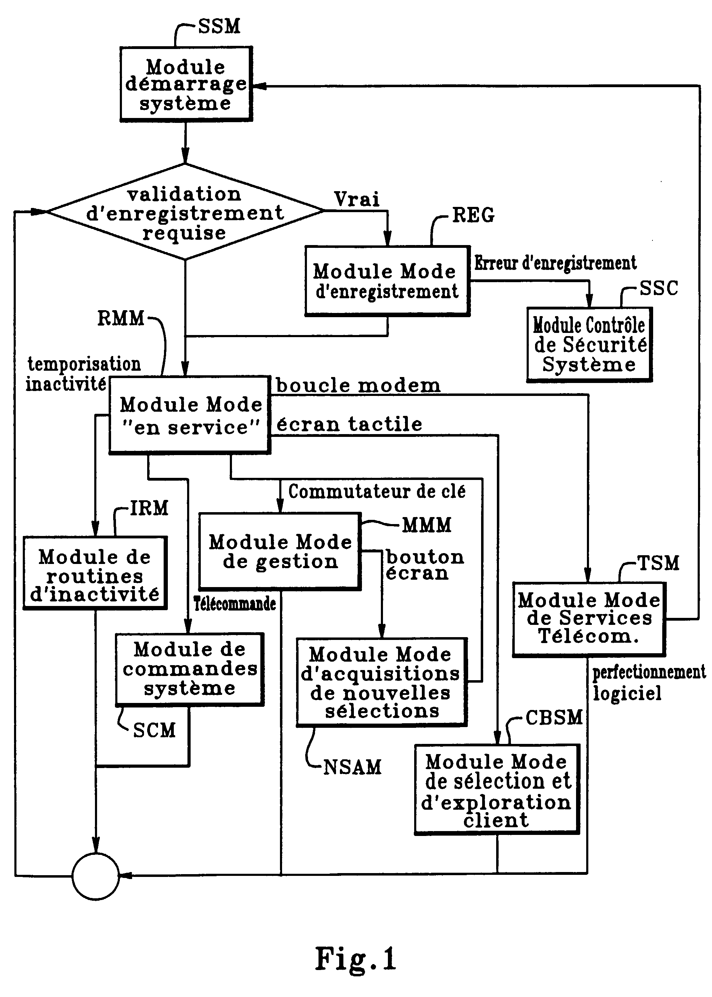

La description suivante, en regard du dessin annexé, le tout donné à titre d'exemple non limitatif , fera bien comprendre comment l'invention peut être réalisée.

La figure unique représente un organigramme faisant apparaître des modules de services spécifiques d'une tâche et géré au moyen du système d'exploitation multitâche, l'ensemble des modules étant inclus dans une librairie stockée dans les moyens de mémorisation.

Préalablement à la description et à la lecture de cet organigramme, il est essentiel de noter que, bien que tous ces modules décrits séparément semblent être utilisés d'une manière séquentielle, en réalité, les tâches spécifiques de ces modules sont exécutées simultanément dans un environnement utilisant le système d'exploitation multitâche. Par conséquent, l'organigramme indique des opérations spécifiques qu'un module doit effectuer et non un branchement vers ce module qui invaliderait toutes les opérations effectuées par les autres modules.

Le premier module, référencé SSM, est le module de démarrage du système. Ce module ne fournit qu'un seul service, par conséquent il se charge automatiquement au moment de la mise sous tension du système. Si le systéme est démarré avec un numéro d'enregistrement correct, il rentre alors directement dans le mode "en service" du module référencé RMM.

Le module REG est le module de mode d'enregistrement qui, lorsqu'il est activé pour la première fois ou lorsqu'une approbation pour un nouvel enregistrement est nécessaire, indique son numéro de série de logiciel et demande que l'utilisateur entre ses coordonnées telles que le nom de l'établissement, l'adresse et le numéro de téléphone. Lorsqu'un système n'est pas enregistré, il ne fonctionne que pour l'enregistrement, fournissant au gérant l'information appropriée nécessaire de manière à l'activer. Une fois que l'utilisateur a fini de rentrer les informations nécessaires, le système entreprend de s'enregistrer lui-même pour une période d'enregistrement prédéterminée et ensuite s'active totalement lui-même. Avant que la période d'enregistrement n'expire, le système tente d'établir une liaison de télécommunications vers un serveur au travers du réseau de distribution. Si une connexion est établie, il renouvelle son enregistrement avec son numéro de série de logiciel et fournit au serveur l'information additionnelle d'utilisateur apportée par le client. Lorsque la période d'enregistrement expire avant que le système ne soit capable d'établir une liaison et de renouveler son enregistrement, il s'invalide après qu'une période de grâce configurable a expiré et envoie un message "hors d'état de fonctionner". Lorsque le gérant insère sa clé, il est guidé pour l'enregistrement du système. Il est possible d'enregistrer le système au moyen d'un téléphone dans le cas où un problème de liaison de télécommunications ou une panne de ligne téléphonique survient. Quand un système est enregistré et activé au travers du réseau de télécommunications ou par l'intermédiaire d'un appel téléphonique vers le central du réseau de distribution, il devient totalement opérationnel dans les deux modes, "utilisateur" et "gérant" (pour la maintenance du système) pour une autre période d'enregistrement.

Le module RMM est le module du mode "en service", qui est le mode de fonctionnement dans lequel le système entre dès que son numéro d'enregistrement est validé. Dans ce mode, le système est prêt pour manipuler toute requête qui peut être déclenchée par différents évènements prédéfinis, comme par exemple:
- des clients qui touchent l'écran: lorsqu'un client ou un utilisateur touche l'écran, le système transfère le contrôle de sa session de premier plan au module CBSM du mode de sélection et d'exploration client,
- des requêtes d'appel serveur du réseau de télécommunications: lorsque le système détecte une boucle sur la ligne téléphonique, il émet une procédure asynchrone d'arrière-plan: le mode de services télécom du module TSM,
- des requêtes concernant le commutateur de clé: lorsque le gérant tourne le commutateur de clé, le système donne le contrôle de sa session de premier plan au module MMM de mode de gestion,
- la réception d'un signal de télécommande: quand une commande est reçue, elle est traitée dans une session d'arrière-plan par le module SCM de commandes système alors que la session de premier plan reste disponible pour d'autres interventions,
- l'apparition d'une fin de temporisation montrant l'inactivité du système: lorsque l'un des différents temporisateurs est activé, le contrôle est temporairement donné au module IRM de routines d'inactivité pour traitement.

Le système reste dans le mode "en service" jusqu'à ce que l'un des évènements décrits ci-avant se produise.

Le module IRM est le module de routines d'inactivité. Ce module contient des routines réalisant des fonctions prédéterminées auxquelles il peut être fait appel lorsque le système est en inactivité et qu'une période de temps prédéfinie mais réglable, correspondant à une temporisation, s'est écoulée. La liste de fonctions proposée ci-après que le système peut traiter n'est bien entendu pas limitative et ne peut qu'augmenter. Il est, en outre, à noter que les nouvelles fonctions qui seraient désirées ajouter à tout système du réseau de distribution, peuvent l'être très simplement et ceci à tout moment et dès qu'elles sont créées en utilisant les services de télécommande de perfectionnement logiciel. Il peut être offert et ajouté de telles fonctions, par exemple, lorsque des besoins ont été constatés concernant la gestion de l'ensemble des systèmes ou tout simplement pour un système donné. Quelques unes des fonctions proposées avec le système sont décrites ci-après:
- affichage de la couverture d'un album pour annoncer sa présence ou sa future intégration dans le système: le système affiche un plein écran d'annonces présentant les couvertures des albums pendant une durée désirée. Il peut être utilisé divers effets panoramiques, zoom avant et arrière par exemple, sur les couvertures de chaque album de manière à attirer l'attention des clients,
- émission de parties de morceaux musicaux présents dans le système: le gérant peut dans ce cas contrôler et échantillonner les morceaux émis pendant une durée spécifiée et faire correspondre lesdits morceaux avec l'affichage de couvertures d'albums sur l'écran,
- reproductions de sélections complètes à des fins promotionnelles internes: le gérant peut imposer une période d'inactivité déterminée après laquelle est totalement reproduite une sélection musicale choisie aléatoirement. A la fin de cette période une sélection musicale est donc prise au hasard dans le système puis jouée dans son intégralité sans paiement de redevances,
- reproductions audio à des fins promotionnelles externes: cette option fonctionne de la même manière que la précédente à la différence près qu'elle autorise le système à accepter de jouer des sélections musicales promotionnelles pour lesquelles des tiers ont payé et qui sont distribuées librement au travers du réseau de télécommunications,
- annonces promotionnelles parlées de nouvelles sélections musicales: il est selon cette option possible de faire oralement la promotion de sélections nouvellement ajoutées ou à ajouter dans un futur proche dans le système et ceci par l'intermédiaire des haut-parleurs intégrés au système,
- repli vers une source auxiliaire: le gérant peut à discrétion demander au système, lorsque ce dernier est inactif, de réaliser un repli vers une source auxiliaire. Par exemple, lorsque cette option est activée et qu'un tuner FM est connecté aux entrées du système et que ce dernier est inactif, ledit système aiguille son entrée de source auxiliaire vers sa sortie principale après que le délai déterminé d'inactivité a expiré.

Le module SCM est le module de commandes système. Ce module permet de réaliser des fonctions qui commandent au système d'accepter une entrée demandée par un dispositif de télécommande infrarouge, ces fonctions étant instantanément traitées sans que le processus en train de se dérouler ne soit arrêté. Un très grand nombre de telles fonctions sont possibles, seules quelques unes sont, de manière non limitative, ci-dessous listées:
- réglage du volume sonore des sélections jouées,
- réglage du volume sonore de la source auxiliaire jouée,
- commande marche/arrêt du microphone,
- réglage du volume sonore du microphone,
- réglage balance, voie droite, voie gauche,
- contrôle du niveau des fréquences basses,
- contrôle du niveau des fréquences aiguës,
- commande d'annulation ou de saut de plage d'une sélection musicale,
- commande d'effets panoramiques, zoom avant, zoom arrière,
- déclenchement d'une remise à zéro du programme logiciel.

Le module MMM est le module de mode de gestion. Ce module est déclenché lorsque le commutateur de clé est tourné par le gérant. L'affichage de l'écran ordinaire est remplacé par un affichage spécifique à la gestion des systèmes. Avec ce nouvel affichage le gérant est capable de contrôler tous les réglages qui sont réalisables avec la télécommande. Il peut également prendre le contrôle de commandes de bas niveau additionnelles permettant par exemple de définir les commandes à valider ou à invalider sur la télécommande. Il est aussi capable de définir un maximum de hauts et bas niveaux pour chaque source de sortie du système, ces limites définissant la gamme disponible sur la télécommande. A partir de cet écran, le gérant est capable d'accéder au mode d'acquisitions de nouvelles sélections en touchant un bouton repéré sur l'écran tactile. Lorsque le gérant a achevé de définir ces commandes ainsi que la configuration du système, il suffit alors qu'il enlève la clé et le système retourne automatiquement au mode "en service".

Le module NSAM est le module de mode d'acquisitions de nouvelles sélections. Lorsque ce mode est activé, un nouvel écran de contrôle apparaît. Ce mode est prévu pour assister le gérant en ce qui concerne la location ou l'acquisition rapide et efficace de titres de sélections musicales. Pour cela, l'écran offre différentes options comme par exemple:
- une recherche par titre,
- une recherche par artiste,
- une recherche par catégorie (Pop, Rock, Country, etc.),
- tri alphabétique,
- tri par date de diffusion.

Le gérant peut effectuer un balayage de l'ensemble des titres disponibles et les sélectionner, simplement en touchant sur l'écran leur désignation, pour les charger. Une fois que les sélections ont été réalisées et que le gérant est sorti du module, le système envoie automatiquement la liste des sélections pour retourner à l'arrière-plan vers le module de mode de services de télécommunications pour traitement, puis retourne avec le contrôle de premier plan au mode de gestion.

Le module CBSM est le module de mode de sélection et d'exploration client. L'accès à ce module est déclenché à partir du mode "en service" au moyen d'une touche sur l'écran. Lorsque le client touche l'écran, l'affichage de l'écran disparaît pour faire place à un menu prévu pour une exploration puissante assistée par des messages vocaux numérisés pour guider l'utilisateur dans son choix de sélections musicales.

Le module TSM est le module de mode de services de télécommunications. Ce module permet de gérer tous les services de gestion disponibles sur le réseau de distribution. Toutes les tâches propres aux télécommunications sont gérées comme des tâches d'arrière-plan du système. Ces tâches n'utilisent toujours que les parties de temps de traitement restant une fois que le système a achevé toutes ses tâches de premier plan. Ainsi, lorsque le système est occupé avec l'une de ses tâches de plus haute priorité, les tâches de télécommunications, automatiquement, vont s'efforcer de diminuer les contraintes sur les ressources du système et récupérer tout temps de traitement du microprocesseur laissé disponible. Quelques unes des tâches gérées par ce module sont ci-après énumérées:
- transfert d'informations audio ou vidéo,
- comptabilité automatisée des redevances pour les sélections musicales,
- comptabilité de l'utilisation des sélections musicales,
- recueil des statistiques,
- diagnostics relatifs au système,
- sécurité du système (intégrité),
- contrôle de l'inventaire des sélections,
- vérification des configurations,
- perfectionnements du programme logiciel.

Le module SSC est le module de contrôle de sécurité du système. Ce module assure la gestion de la sécurité, chaque système se met en rapport avec un système contrôleur local selon un schéma temporel préétabli pour l'acquisition du signal d'approbation, sous la forme du numéro d'enregistrement, l'autorisant à fonctionner. En outre, s'il est constaté une fraude ou si le système ne peut plus communiquer au travers du réseau, ledit système s'arrête automatiquement de fonctionner.

Pour conclure, le système de reproduction audio-visuelle selon l'invention présente, comme cela vient d'être vu, un grand nombre d'avantages relativement aux systèmes de l'art antérieur. Ce système puissant utilisant un ordinateur est capable de stocker et reproduire n'importe quelle sélection musicale en conservant sa qualité d'origine. Il permet de remplacer de manière simple et efficace tous les dispositifs mécaniques et électroniques sophistiqués de l'art antérieur qui étaient générateurs de pannes, comme les bras de chargement des disques, les lasers, etc., en réduisant ainsi très significativement les coûts de maintenance. Il est simple et peu volumineux. Les gérants ou propriétaires de ce système peuvent efficacement contrôler les titres des sélections musicales puisqu'ils commandent uniquement les titres désirés, évitant ainsi de passer par une compagnie de distribution qui ordinairement n'acquiert que de faibles quantités de titres uniques puis imposent une rotation à leurs clients. Il est ici possible de n'acquérir que des titres spécifiques et ceci à prix réduit, plutôt que des albums CD entiers, ce qui permet de diminuer significativement les coûts de gestion. Avec le module intégré de vidéo interactive, ce système peut être également utilisé à des fins promotionnelles, d'étude de marché ou même utilisé comme machine karaoké. Enfin, l'utilisation d'un système d'exploitation multitâche autorise la gestion simultanée et sans conflit de l'ensemble des tâches exécutées, ce qui représente un avantage considérable.

## Revendications

1. Système de reproduction audio-visuelle déclenché par paiement de redevances, caractérisé en ce qu'il comprend un dispositif à microprocesseur relié à un dispositif de paiement, ledit dispositif à microprocesseur comportant d'une part, des moyens de mémorisation, pour entre autres stocker sous forme numérique, les informations visuelles et sonores à exploiter, et d'autre part étant relié, par l'intermédiaire d'interfaces, à des moyens de visualisation et des moyens de reproduction sonores permettant de créer un univers multimédia, ledit système étant géré au moyen d'un système d'exploitation multitâche incluant une librairie d'outils et de services constituée d'une pluralité de modules intégrée dans les moyens de mémorisation pour permettre l'exécution d'opérations simultanées et ordonnées sur au moins les moyens de visualisation et les moyens de reproduction sonore en évitant tout conflit, les tâches spécifiques des modules étant exécutées simultanément, et la librairie d'outils et de services comprenant au moins un module RMM correspondant au mode de fonctionnement du système dans lequel le système est prêt à manipuler toute requête déclenchée par des événements prédéfinis tels que :
- le toucher de l'écran par un client,
- l'apparition d'une fin de temporisation montrant l'inactivité du système.

2. Système de reproduction audio-visuelle selon la revendication 1, caractérisé en ce que les moyens de visualisation comportent un écran tactile pour permettre le contrôle du système ou la maintenance en fonction des outils ou services de la librairie exécutée.

3. Système de reproduction audio-visuelle selon la revendication 1 ou 2, caractérisé en ce que les moyens de visualisation permettent l'affichage d'images animées telles que des clips vidéo ou des images graphiques fixes pendant la reproduction sonore.

4. Système de reproduction audio-visuelle selon une des revendications 1 à 3, caractérisé en ce qu'un outil de gestion est déclenché par un commutateur de clé actionné par le gérant pour permettre à ce dernier, soit de configurer le système, soit d'acquérir de nouvelles sélections.

5. Système de reproduction audio-visuelle selon une des revendications précédentes, caractérisé en ce qu'il est de plus, relié, par l'intermédiaire d'une interface, à un modem de télécommunications, ledit système étant connecté à un réseau de distribution d'informations audio-visuelles au moyen du modem de télécommunications, cette liaison de télécommunication étant également gérée par un module TSM de service de télécommunication du système d'exploitation multitâche inclus dans la librairie d'outils et de services intégrée dans les moyens de mémorisation, ce module TSM permettant notamment d'exécuter une pluralité de tâches comprenant une tâche de perfectionnement à distance du système d'exploitration.

6. Système de reproduction audio-visuelle selon une des revendications précédentes, caractérisé en ce qu'il comporte une temporisation pour un déclenchement automatique et périodique d'une fonction d'un module de routine d'inactivité après une durée prédéterminée d'inutilisation du système, cette temporisation étant inscrite dans les moyens de mémorisation et gérée par le système d'exploitation multitâche.

7. Système de reproduction audio-visuelle selon l'une des revendications précédentes, caractérisé en ce que les moyens de visualisation comportent principalement un moniteur vidéo pour la reproduction des images des informations audio-visuelles coopérant avec un écran tactile de contrôle et de commande pour sélectionner au moins un tableau de contrôle parmi les suivants, un premier tableau à déroulement de sélection de titres pour aider à la recherche et à la sélection d'un titre désiré, un second tableau de contrôle de gestion pour le réglage du volume, des basses, des aiguës ou la commande de panoramiques sur le moniteur vidéo, un troisième tableau de balayage de la base de données de titres, d'utilisation privée, pour permettre l'exploration de la base de données contenant les titres disponibles au travers du réseau de distribution d'informations audio-visuelles, un quatrième tableau de statistiques, d'utilisation privée, pour les estimations et les calculs statistiques relatifs aux titres.

8. Système de reproduction audio-visuelle selon l'une des revendications précédentes, caractérisé en ce qu'il comporte un module de commande système pour réaliser des fonctions envoyées par un dispositif de télécommande infrarouge au système et constituées par une entrée demandée par ce dispositif de télécommande.

9. Système de reproduction audio-visuelle selon la revendication 8, caractérisé en ce que les fonctions possibles sont au moins l'une des fonctions ci-dessous :
réglage du volume sonore des sélections jouées ;
réglage du volume sonore de la source auxiliaire jouée ;
commande marche-arrêt du microphone,
réglage du volume sonore du microphone
réglage balance, voie droite, voie gauche,
contrôle du niveau des fréquences basses,
contrôle du niveau des fréquences aigues,
commandes d'annulation ou de saut de plage d'une sélection musicale,
commande d'effets panoramiques, zoom avant, zoom arrière,
déclenchement d'une remise à zéro du programme logiciel.

10. Système de reproduction audio-visuelle selon la revendication 5, caractérisé en ce qu'il comporte un module de routine d'inactivité permettant de réaliser au moins une des fonctions ci-après :
émission de partie de morceaux musicaux présents dans le système échantillonable pendant une durée spécifiée par le gérant ;
reproduction de sélection complète à des fins promotionnelles interne après une période d'inactivité déterminée ;
repli vers une source auxiliaire après un délai déterminé d'inactivité.

## Patentansprüche

1. System der audio-visuellen Wiedergabe, welches durch Zahlung von Gebühren aktiviert wird, dadurch gekennzeichnet, daß es eine Mikroprozessoreinrichtung aufweist, die mit einer Bezahlungseinrichtung verbunden ist, wobei die Mikroprozessoreinrichtung zum einen Teil Speichermittel umfaßt zum unter anderem Speichern in digitaliserter Form der zu verarbeitenden visuellen und Klanginformationen, und zum anderen Teil unter Zwischenschaltung von Schnittstellen mit Mitteln der Visualisierung und Mitteln der Klangwiedergabe verbunden ist, die es erlauben eine Multimediawelt zu schaffen, wobei das System mittels eines Multi-Task-Betriebssystemes gesteuert wird, welches eine Bibliothek von Werkzeugen und Diensten beinhaltet, die aus einer Mehrzahl von Modulen zusammengesetzt ist, die in die Speichermittel integriert ist, zum Erlauben der Ausführung von gleichzeitigen und geordneten Operationen auf wenigstens den Mitteln zur Visualisierung und den Mitteln zur Klangwiedergabe unter Vermeidung jeden Konflikts, wobei die spezifischen Aufgaben der Module gleichzeitig ausgeführt werden, und wobei die Bibliothek der Werkzeuge und Dienste wenigstens ein Modul RMM umfaßt entsprechend einem Betriebsmodus des Systems, in dem das System bereit ist jede Anfrage zu behandeln, die durch vorbestimmte Ereignisse ausgelöst wird, wie:
- das Berühren des Bildschirms durch einen Kunden,
- das Erscheinen eines Endes der Verzögerungszeit, was die Inaktivität des Systems anzeigt.

2. System der audio-visuellen Wiedergabe nach Anspruch 1, dadurch gekennzeichnet, daß die Mittel der Visualisierung einen Kontaktbildschirm umfassen zum Erlauben der Steuerung des Systems oder der Instandhaltung indem die Werkzeuge oder Dienste der Bibliothek angewendet werden.

3. System der audio-visuellen Wiedergabe nach Anspruch 1 oder 2, dadurch gekennzeichnet, daß die Mittel zur Visualisierung die Anzeige von bewegten Bildern, wie Videoclips oder von unveränderlichen grafischen Bildern während der Klangwiedergabe erlauben.

4. System zur audio-visuellen Wiedergabe gemäß einem der Ansprüche 1 bis 3, dadurch gekennzeichnet, daß ein Steuerwerkzeug ausgelöst wird durch einen Schlüsselschalter, der durch den Verwalter betätigt wird, um es dem letzteren zu erlauben, entweder das System zu konfigurieren oder neue Auswahlen zu erwerben.

5. System der audio-visuellen Wiedergabe gemäß einem der vorhergehenden Ansprüche, dadurch gekennzeichnet, daß es darüber hinaus unter Zwischenschaltung einer Schnittstelle mit einem Fernübertragungsmodem verbunden ist, wobei das System mit einem Verteilernetz für audio-visuelle Informationen mittels des Fernübertragungsmodems verbunden ist, wobei diese Verbindung der Fernübertragung ebenso durch ein Dienstmodul TSM der Fernübertragung des Multi-Task-Betriebssystems gesteuert wird, welches in der Bibliothek der Werkzeuge und Dienste, die in den Speichermitteln integriert ist, beinhaltet ist, wobei das Modul TSM insbesondere erlaubt eine Mehrzahl von Aufgaben auszuführen, die eine Aufgabe der Fern-Verbesserung des Betriebssystems aufweisen.

6. System der audio-visuellen Wiedergabe gemäß einem der vorhergehenden Ansprüche, dadurch gekennzeichnet, daß es eine Verzögerung umfaßt für eine automatische und periodische Aktivierung einer Funktion eines Moduls einer Inaktivitätsroutine nach einer vorbestimmten Dauer der Nichtbenutzung des Systems, wobei die Verzögerung in die Speichermittel geschrieben ist und durch das Multi-Task-Betriebssystem gesteuert wird.

7. System der audio-visuellen Wiedergabe gemäß einem der vorhergehenden Ansprüche, dadurch gekennzeichnet, daß die Mittel der Visualisierung hauptsächlich einen Videomonitor für die Wiedergabe der Bilder der audio-visuellen Informationen umfassen, der mit einem Kontaktbildschirm zur Steuerung und zum Befehlen zusammenwirkt zum Auswählen wenigstens einer Steuertafel unter den folgenden, einer ersten Tafel zum Abrollen der Auswahl an Titeln zum Unterstützen bei der Suche und der Auswahl eines gewünschten Titels, einer zweiten Tafel der Kontrolle der Steuerung für die Einstellung der Lautstärke, der Bässe, der Höhen oder des Panoramabefehls auf dem Videomonitor, einer dritten Tafel des Abtastens der Titeldatenbank, für die private Benutzung, zum Erlauben der Durchsuchung der Datenbank, die die über das Verteilernetz der audio-visuellen Informationen verfügbaren Titel enthält, einer vierten Statistiktafel, für die private Benutzung, für die Schätzungen und statistischen Berechnungen in Bezug auf die Titel.

8. System der audio-visuellen Wiedergabe gemäß einem der vorhergehenden Ansprüche, dadurch gekennzeichnet, daß es ein Systembefehlsmodul umfaßt zum Erzielen von Funktionen, wie dem System über eine Infrarotfernbedienungseinrichtung gesandt werden und die über einen angeforderten Eingang über die Fernbedienungseinrichtung gebildet werden.

9. System der audio-visuellen Wiedergabe gemäß Anspruch 8, dadurch gekennzeichnet, daß die möglichen Funktionen wenigstens eine der nachfolgenden Funktionen sind:
- Einstellung der Klanglautstärke der gespielten Auswahlen;
- Einstellung der Klanglautstärke der gespielten Hilfsquelle;
- Start/Stop-Befehl des Mikrofons,
- Einstellung der Klanglautstärke des Mikrofons,
- Einstellung des Gleichgewichts, rechter Kanal, linker Kanal,
- Kontrolle der Höhe der tiefen Frequenzen,
- Kontrolle der Höhe der hohen Frequenzen,
- Befehle der für ungültig Erklärung oder des Überspringens einer Musikauswahl,
- Befehl von Panoramaeffekten, Vergrößerung, Verkleinerung,
- Aktivierung einer Rücksetzung auf 0 des Softwareprogramms.

10. System der audio-visuellen Wiedergabe gemäß Anspruch 5, dadurch gekennzeichnet, daß es ein Modul der Inaktivitätsroutine umfaßt, welches die Erzielung wenigstens einer der nachfolgenden Funktionen erlaubt:
Teilausstrahlung der Musikstücke, die in dem System vorhanden sind zur Probe während einer durch den Verwalter spezifizierten Dauer;
Wiedergabe der vollständigen Auswahl zu internen Werbezwecken nach einer vorbestimmten Zeitdauer der Inaktivität;
Rückkehr zu einer Hilfsquelle nach einer vorbestimmten Inaktivitätsfrist.

## Claims

1. Audiovisual reproduction system activated by payment of royalties, characterised in that it comprises a microprocessor device connected to a payment device, said microprocessor device comprising on the one hand memory means, in order *inter alia* to store in digital form the visual and sound information to be used, and on the other hand being connected, via interfaces, with display means and sound reproduction means allowing a multimedia universe to be created, said system being managed by means of a multitask operation system including a library of tools and services constituted by a plurality of modules integrated into the memory means to permit the execution of operations simultaneous and arranged on at least the display means and the sound reproduction means while avoiding any conflict, the specific tasks of the modules being executed simultaneously, and the library of tools and services comprising at least one module RMM corresponding to the operating mode of the system in which the system is ready to handle any request activated by predefined events such as:
- the touching of the screen by a customer,
- the appearance of an end-of-time-delay showing the inactivity of the system.

2. Audiovisual reproduction system according to Claim 1, characterised in that the display means comprise a touch-sensitive screen to permit the control of the system or the maintenance as a function of the tools or services of the executed library.

3. Audiovisual reproduction system according to Claim 1 or 2, characterised in that the display means permit the display of animated images such as video clips or fixed graphical images during the sound reproduction.

4. Audiovisual reproduction system according to one of Claims 1 to 3, characterised in that a management tool is activated by a key switch actuated by the manager to allow the latter either to configure the system or to acquire new selections.

5. Audiovisual reproduction system according to one of the preceding claims, characterised in that it is also connected, via an interface, to a telecommunications modem, said system being connected to an audiovisual information distribution network by means of the telecommunications modem, this telecommunications link also being managed by a telecommunications service module TSM of the multitask operation system included in the library of tools and services integrated into the memory means, this module TSM making it possible, in particular, to perform a plurality of tasks comprising a task of remotely refining the operation system.

6. Audiovisual reproduction system according to one of the preceding claims, characterised in that it comprises a time-delay for automatically and periodically activating a function of an inactivity routine module after a predetermined period of non-use of the system, this time-delay being recorded in the memory means and managed by the multitask operation system.

7. Audiovisual reproduction system according to one of the preceding claims, characterised in that the display means comprise principally a video monitor for reproducing the images of audiovisual information co-operating with a touch-sensitive screen for control and command for selecting at least one control table from among the following, a first scrolling table for selecting titles to help in the search and the selection of a desired title, a second management control table for adjusting the volume, bass and treble tone or for controlling panning on the video monitor, a third table for scanning the database of titles, for private use, to allow the exploration of the database containing the titles available via the audiovisual information distribution network, a fourth table of statistics, for private use, for statistical estimation and calculation relating to the titles.

8. Audiovisual reproduction system according to one of the preceding claims, characterised in that it comprises a system control module for performing functions sent by an infrared remote-control device to the system and constituted by an input requested by this remote-control device.

9. Audiovisual reproduction system according to Claim 8, characterised in that the possible functions are at least one of the functions below:
noise level adjustment of the selections being played,
noise level adjustment of the auxiliary source being played,
on/off control of the microphone,
noise level adjustment of the microphone,
balance adjustment, right channel/left channel
bass frequency level control,
treble frequency level control,
control to cancel or skip a track of a musical selection,
control for panning, zoom in, zoom out effects,
activation of a reset to zero of the software program.

10. Audiovisual reproduction system according to Claim 5, characterised in that it comprises an inactivity routine module making it possible to perform at least one of the following functions:
transmission of part of the musical items present in the system capable of being sampled over a period specified by the manager;
reproduction of the complete selection for internal promotional purposes after a given period of inactivity;
falling back to an auxiliary source after a given period of inactivity.
